# EUROPÄISCHE PATENTSCHRIFT

(11) **EP 1 273 482 B1**
(45) Veröffentlichungstag und Bekanntmachung des Hinweises auf die Patenterteilung: **05.09.2007**
(21) Anmeldenummer: 02015068.6
(22) Anmeldetag: 05.07.2002
(51) Int. Cl.: B60R 16/02

(54) **Steuereinrichtung für elektrisch betriebene Funktionseinheiten in Kraftfahrzeugen**
Control device for electric function units in vehicles
Dispositif de commande pour sous-ensembles électriques dans un véhicule

(30) Priorität: 06.07.2001 DE 10132291
(43) Veröffentlichungstag der Anmeldung: 08.01.2003
(73) Patentinhaber: Kiekert Aktiengesellschaft, 42579 Heiligenhaus (DE)
(72) Erfinder: Platzköster, Andreas, Dipl.-Ing., 46514 Schermbeck (DE); Jendritza, Daniel, Dr.-Ing., 47809 Krefeld (DE)
(74) Vertreter: Nunnenkamp, Jörg

(56) Entgegenhaltungen:
- SPECKS J W ET AL: "LIN-PROTOKOLL, ENTWICKLUNGSWERKZEUGE UND SOFTWARE-SCHNITTSTELLE FUER LOKALE DATENNETZWERKE IM KRAFTFAHRZEUG" VDI BERICHTE, DUESSELDORF, DE, Nr. 1547, 5. Oktober 2000 (2000-10-05), Seiten 1-24, XP002261302 ISSN: 0083-5560

## Beschreibung

Die Erfindung betrifft eine Steuereinrichtung für elektrisch betriebene Funktionseinheiten in Kraftfahrzeugen, wobei die Funktionseinheiten, z. B. Zentralverriegelungseinheit, Kraftfahrzeugtürverschlüsse, Fensterheber, Einklemmschutz, (Außen)-Spiegel etc., mittels eines Bussystems mit ausschließlich einem Steuergerät kommunizieren, wobei ferner das einzige Steuergerät sämtliche Steuer-, Überwachungs- und Auswertefunktionen übernimmt und die Funktionseinheiten lediglich über von dem Steuergerät beaufschlagte Aktuatoren und/oder Sensoren verfügen, und wobei zur Spannungsversorgung der Funktionseinheiten sowie des Steuergerätes und des Bussystems ein Akkumulator dient.

Im gattungsbildenden Stand der Technik nach dem Aufsatz "LIN-Protokoll, Entwicklungswerkzeuge und Software - Schnittstelle für lokale Datennetzwerke im Kraftfahrzeug", Dr. Ing. J. W. Specks et al, VDI Berichte, Düsseldorf, Nr. 1547 vom 05. Oktober 2000, Seiten 1 bis 24 wird eine Steuereinrichtung mit einem zentralen einzigen Steuergerät angesprochen, welches über einen LIN-Bus mit einzelnen Funktionseinheiten verbunden ist.

Bei anderen Steuereinrichtungen wird regelmäßig so vorgegangen, dass eine Mehrzahl von mit einem Bedienteil verbundenen Steuergeräten zum Aktivieren und Steuern der elektrisch betriebenen Funktionseinheiten zum Einsatz kommt, wobei die Steuergeräte wiederum funktional mit den jeweiligen Funktionseinheiten verbunden sind (vgl. EP 1 063 576 A2).

Auch ist es bekannt, bei einer Schließvorrichtung für ein Kraftfahrzeug so vorzugehen, dass das zugehörige Steuergerät durch ein Bussystem über eine Buselektronik mit einer Sendeelektronik und/oder Empfangselektronik sowie einer Schlosselektronik in Verbindung steht. Dabei sind Buselektronik, Sendeelektronik sowie Empfangselektronik und Schlosselektronik baulich in einem Gehäuse zu einem Schlossmodul integriert, welches seinerseits einen Anschluss für das Bussystem aufweist (vgl. WO 98/13566).

Ähnlich wird im Rahmen der DE 41 41 505 A1 vorgegangen, welche verschiedene Türmodule und Motorsitzmodule über ein Bussystem miteinander und mit einer zentralen Steuerstation kombiniert.

Schließlich ist eine Vorrichtung zur Steuerung einer Anzahl von Aktuatoren von einer Zentralverriegelungsanlage aus bekannt. Zur Signalübertragung zwischen wenigstens einem Signalgeber und einem Steuergerät ist eine Mehrdrahtverbindung aus zumindest zwei Leitungen als Zweidrahtverbindung vorgesehen (vgl. EP 0 826 857 A1).

Der Stand der Technik liefert zusammengenommen nur einzelne Insellösungen, was bekannte Schließeinrichtungen oder auch Türmodule angeht. Sofern allgemein ein Steuersystem für elektrisch betriebene Funktionseinheiten in Kraftfahrzeugen angesprochen wird, glaubt man an dieser Stelle nicht auf eine Vielzahl von zusätzlichen Steuergeräten zum Aktivieren und Steuern jeder einzelnen Funktionseinheit auskommen zu können. Das ist aufwendig und kostenintensiv. Außerdem wird die Montage und der Zusammenbau erschwert. - Hier will die Erfindung Abhilfe schaffen.

Der Erfindung liegt das technische Problem zugrunde, eine Steuereinrichtung der eingangs beschriebenen Gestaltung so weiter zu entwickeln, dass bei einfachem und kostengünstigem Aufbau zusätzlich die Montage und der Zusammenbau erleichtert sind sowie die Funktionssicherheit gesteigert.

Zur Lösung dieses technischen Problems ist eine gattungsgemäße Steuereinrichtung dadurch gekennzeichnet, dass das Steuergerät eine angeschlossene Überwachungseinheit aufweist, welches das Steuergerät turnusmäßig überprüft und ansonsten in einen so genannten "Sleep-Modus" überführt, wobei zur Energieversorgung der Überwachungseinheit eine separate Versorgungsquelle dient.

Das heißt, die Erfindung kommt mit lediglich einem einzigen Steuergerät aus, verzichtet also ausdrücklich auf den Funktionseinheiten zugeordnete Module, wie sie der Stand der Technik unabdingbar fordert (vgl. EP 1 063 576 A2, WO 98/13566 sowie DE 41 41 504 A1). Denn derartige Module bestehen in der Regel aus einer Empfangseinheit, einer Auswerteeinheit sowie einer Steuereinheit (vgl. WO 98/13566, Seite 1, 1. Absatz).

Solche Funktionalitäten werden im Rahmen der Erfindung also in das einzige Steuergerät verlagert. Dagegen sind die jeweiligen Funktionseinheiten lediglich mit Aktuatoren, also in der Regel elektrisch betätigten Motoren, ausgerüstet, die die jeweils gewünschte Funktion darstellen. So mag es sich bei der Funktionseinheit "Außenspiegel" beim Aktuator um einen zugehörigen Verstellmotor für den Außenspiegel handeln. Bei einem Kraftfahrzeugtürverschluss gehören ein Zentralverriegelungsmotor mit zugehöriger Antriebseinheit sowie gegebenenfalls ein Diebstahlsicherungsmotor mit angeschlossenen Aggregaten zu den betreffenden Aktuatoren.

Darüber hinaus verfügen die Funktionseinheiten gegebenenfalls über Sensoren, welche Funktionszustände an das Steuergerät melden. Bei diesen Sensoren mag es sich um beispielsweise Hallsensoren handeln, die die Stellung einer Drehfalle im Kraftfahrzeugtürverschluss abfragen. Auch ein Einklemmschutz liefert vergleichbare Sensorsignale, nämlich dann, wenn eine elektrisch betätigte Fensterscheibe beim Hochfahren möglicherweise einen Arm, eine Hand etc. einklemmt.

Im erstgenannten Fall sorgt das zentrale Steuergerät beispielsweise dafür, dass bei geschlossener Drehfalle eine Zuziehfunktion aktiviert wird, um eine zugehörige Kraftfahrzeugtür dichtend gegen die Türgummidichtung zu pressen. Bei der letztgenannten Fallversion gewährleistet das Steuergerät demgegenüber, dass der zugehörige Aktuator (Fensterhebermotor) der Funktionseinheit "Fensterheber" augenblicklich angehalten wird und in entgegengesetzter Richtung arbeitet, damit das Fenster (wieder) geöffnet wird.

Jedenfalls sorgt das einzige Steuergerät durchgängig dafür, dass die zuvor getrennten Module mit ihren jeweiligen Funktionen zusammengefasst und gemeinsam ausgewertet sowie gesteuert werden können. Zu den Funktionseinheiten, mit welchen das einzige Steuergerät erfindungsgemäß kommuniziert, mögen auch die Einspritzpumpe, Zündungsverstelleinrichtung, ABS/ASR/ESP-Einheit, eine oder mehrere Sicherheitseinrichtungen (Airbag) und so weiter gehören. Das heißt, dass das Steuergerät über sämtliche Funktionen im und am Kraftfahrzeug, im und am Motor sowie am Fahrwerk unterrichtet ist und diese beeinflusst. Auf diese Weise können Verknüpfungen einzelner Signale und Steuerbefehle vorgenommen werden, die bisher nicht für möglich gehalten worden sind.

Immer ist das Bauvolumen gegenüber bisherigen Ausgestaltungen deutlich verringert. Das gilt auch für das Gewicht der einzelnen Funktionseinheiten, weil diese erfindungsgemäß von dort bisher realisierten Elektronikeinheiten größtenteils befreit sind. Hieraus resultiert auch eine Verringerung der Anzahl an erforderlichen Verbindungskabeln, was wiederum das Gewicht vermindert.

Außerdem folgt aus der Verringerung der Anzahl an verwendeten Bauteilen eine weitere Vereinfachung, weil hierdurch den Anforderungen an Redundanz mit weniger Aufwand entsprochen werden kann. Ebenso sind die Montage und der Einbau erleichtert.

Die an das Steuergerät angeschlossene Überwachungseinheit überprüft das Steuergerät turnusmäßig und überführt es ansonsten in einen sogenannten "Sleep-Modus" bzw. "Standby-Betrieb". Das heißt, die Überwachungseinheit kontrolliert in regelmäßigen Abständen die Funktionssicherheit des Steuergerätes. Dazwischen wird dieses in einen Schlafmodus geschaltet, so dass der Stromverbrauch minimiert ist.

Bei der Überwachungseinheit handelt es sich um ein Hardwaremodul, welches mit dem Steuergerät verbunden ist sowie ein zugehöriges Überwachungsprogramm. Dieses sendet regelmäßig Signale an das Hardwaremodul bzw. das Steuergerät und signalisiert auf diesem Weg eventuelle Fehler. Im Anschluss hieran versucht das in der Überwachungseinheit hinterlegte Programm das Steuergerät neu zu starten. Dabei ist es möglich, die beschriebene Fehlersuche periodisch in vorgegebenen Zeitabständen zu wiederholen.

Unabhängig davon ist in das Steuergerät regelmäßig eine Diagnoseeinheit integriert, welche turnusgemäß für eine Selbstdiagnose sorgt. D. h., die Diagnoseeinheit überprüft das Steuergerät und zusätzlich sämtliche Funktionseinheiten, und zwar insbesondere dahingehend, ob die aufgenommenen Ströme, anliegenden Spannungen, anstehende Temperaturen etc. innerhalb vorgegebener Grenzen liegen. Auch die einzelnen Aktuatoren und/oder Sensoren lassen sich hiermit regelmäßig abfragen und überprüfen.

Das Bussystem setzt sich in der Regel aus einem oder mehreren CAN-Buszweigen und LIN-Buszweigen zusammen. Bekanntermaßen handelt es sich bei solchen Buszweigen bzw. einem Bussystem allgemein um eine Verbindungseinheit, welche zur Kommunikation zwischen den einzelnen Funktionseinheiten und dem Steuergerät dient. D. h., über den Bus werden sowohl Daten als auch Steuersignale ausgetauscht.

Bei einem CAN-Buszweig handelt es sich um ein serielles Feldbussystem CAN (Controller Area Network), welches echtzeit- und multimasterfähig ist. Da es sich regelmäßig um einen Zweidraht-Bus handelt, lassen sich komplexe Datenpakte eines zugehörigen CAN-Protokolls aus üblicherweise sieben verschiedenen Bit-Feldern übertragen. Das dahinterstehende CAN-Protokoll verfügt über einen vorgegebenen Modus, an welchen auch die Funktionseinheiten bzw. sämtliche zugehörigen Hardwarekomponenten angepasst sein müssen.

Folglich dient der CAN-Buszweig mit seinem dahinterstehenden CAN-Protokoll üblicherweise dazu, komplexe Befehle und Steuerungen ausführen zu können. Hierzu gehört beispielsweise die Motorelektronik oder die Steuerung von Fahr- und Bremshilfen, also die Auswertung fahrdynamischer Zustände und Ableitung von zugehörigen Regelalgorithmen.

Einsatzgebiete, welche ohne die Komplexität des CAN-Protokolls und die damit verbundenen hohen Kosten auskommen können, greifen zumeist auf einen LIN-Buszweig zurück. Hierbei handelt es sich um einen Eindrahtbuss, welcher als Master/Slave-Bus ausgestaltet ist und von einem zugehörigen Akkumulator mit Strom versorgt wird. Ein solcher LIN (Local Interconnact Network)-Bus dient vor allem dazu, kostengünstige Komponenten miteinander zu verbinden, um ein hierarchisches Datennetz aufbauen zu können.

Folgerichtig kommt der CAN-Buszweig im Rahmen der Erfindung dann zum Einsatz, wenn Funktionseinheiten zweiseitig mit dem Steuergerät kommunizieren und komplexe Datenprotokolle ausgetauscht werden müssen. Das ist beispielsweise bei der Zentralverriegelungseinheit, dem Fensterheber etc. der Fall. Dagegen greift die vorliegende Erfindung auf einen oder mehrere LIN-Buszweige dann zurück, wenn Funktionseinheiten zu verbinden sind, die lediglich einseitig Befehle vom Steuergerät empfangen oder ausschließlich Signale senden. Hierbei handelt es sich beispielsweise um den Außenspiegel, den Einklemmschutz, eine Sensoreinheit etc..

Ferner ist vorgesehen, dass der wenigstens eine LIN-Buszweig mittels des zumindest einen CAN-Buszweiges über einen CAN-LIN-Transceiver angesteuert wird, d. h., der LIN-Buszweig stellt quasi einen vom CAN-Buszweig gesteuerten und hiervon abgezweigten eigenen Kreis dar. Der CAN/LIN-Transceiver sorgt dafür, dass das zugehörige CAN-Protokoll in ein LIN-Protokoll und umgekehrt transformiert werden.

Auf diese Weise kommt der LIN-Buszweig zur Verknüpfung von Funktionseinheiten zum Einsatz, die keine komplexe Kommunikation mit dem Steuergerät eingehen, sondern lediglich einen Master/Slave-Bus benötigen. Dagegen wird auf den (teureren) CAN-Buszweig dann zurückgegriffen, wenn sich dies aufgrund der Komplexität der zu verarbeitenden Signale und/oder Steuerbefehle nicht vermeiden lässt.

Schließlich umfasst die Erfindung auch Ausgestaltungen der Art, dass die mit Hilfe des Bussystems übertragenen Daten gemultiplext werden. Ein solcher Multiplexbetrieb stellt sicher, dass mehrere Datenströme eines Senders bzw. des Steuergerätes auf logische Kanäle eines einzigen physischen Übertragungsmediums, vorliegend des Ein- oder Zweidrahtsystems, zurückgreifen. Der Empfänger teilt die entsprechend übertragenen Datenströme wieder auf. D. h., sowohl auf Sender- als auch Empfängerseite wird je ein Multiplexer gebraucht. Dabei existieren zwei Verfahren, mit deren Hilfe die Aufteilung der Datenströme in parallele Kanäle des Übertragungsmediums realisiert werden kann: das Frequenzmultiplex-Verfahren und das Zeitmultiplex-Verfahren.

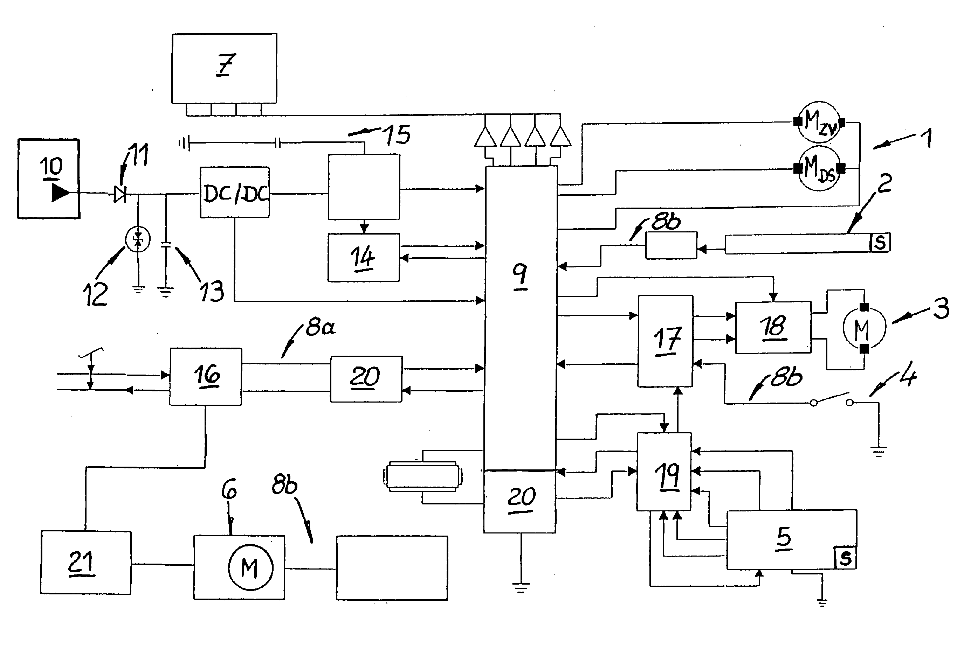

Im Folgenden wird die Erfindung anhand einer lediglich ein Ausführungsbeispiel darstellenden Zeichnung näher erläutert. Die einzige Figur stellt die beschriebene Steuereinrichtung schematisch anhand eines Funktionsschaltbildes dar.

Man erkennt eine Steuereinrichtung für elektrisch betriebene Funktionseinheiten 1 bis 7 in Kraftfahrzeugen. Bei den Funktionseinheiten 1 bis 7 handelt es sich im Detail um eine Zentralverriegelung bzw. Zentralverriegelungseinheit 1, mehrere Kraftfahrzeugtürverschlüsse 5, einen Fensterheber 3 mit zugehörigem Einklemmschutz 4, einen Spiegel bzw. Außenspiegel 6, eine Sensoreinheit 2 sowie eine Beleuchtungseinrichtung 7. Die einzelnen Funktionseiheiten 1 bis 7 sind mittels eines Bussystems 8a, 8b untereinander sowie mit einem Steuergerät 9 verbunden und kommunizieren über dieses Bussystem 8a, 8b.

Erfindungsgemäß nimmt das einzige Steuergerät 9 sämtliche Steuer-, Überwachungs- und Auswertefunktionen für die nur beispielhaft dargestellten Funktionseinheiten 1 bis 7 wahr. Folgerichtig verfügen die Funktionseinheiten 1 bis 7 lediglich über von dem Steuergerät 9 beaufschlagte Aktuatoren M, M_{ZV} und M_{DS} und/oder Sensoren S. Bei den Aktuatoren M, M_{ZV} und M_{DS} handelt es sich im Rahmen des Ausführungsbeispiels um Elektromotoren M, M_{ZV} und M_{DS} während die Sensoren S allgemein Messwertaufnehmer bezeichnen.

Zur Spannungsversorgung der Funktionseinheiten 1 bis 7 sowie des Steuergerätes 9 und natürlich auch des Bussystems 8a, 8b dient ein Akkumulator 10. Dieser vorsorgt über eine Diode 11 einen DC/DC-Wandler DC/DC, welcher die Versorgungsspannung (12 Volt) bedarfsweise in eine andere Gleichspannung, z. B. 42 Volt, umwandelt. Das ist jedoch nicht zwingend. Denn genauso gut könnte zur Darstellung einer anderen (zweiten) Versorgungsspannung (42 Volt) eine separate Batterie bzw. ein zugehöriger Akkumulator realisiert sein. So oder so dient die zweite Versorgungsspannung üblicherweise dazu, besonders energieintensive Funktionseinheiten anzutreiben, wie den Fensterheber 3 inklusive zugehörigem Aktuator M.

Ein Spannnungskonstanthalter 12 sowie Kondensator 13 eingangsseitig sorgen dafür, dass Spannungsspitzen und übergroße Spannungsschwankungen von den Funktionseinheiten 1 bis 7, dem Steuergerät 9 und dem Bussystem 8a, 8b ferngehalten werden. Mit Hilfe einer Überwachungseinheit 14 wird das Steuergerät 9 turnusmäßig einer Überwachung und Prüfung unterzogen. Zur Energieversorgung der Überwachungseinheit 14 dient eine separate Versorgungsquelle 15, um einen sicheren und zuverlässigen Betrieb zu gewährleisten. Außerhalb der Überwachungsphasen schaltet die Überwachungseinheit 14 das Steuergerät 9 in einen "Standby-Modus", so dass der Stromverbrauch minimiert ist.

Das Bussystem 8a, 8b setzt sich aus mehreren CAN-Buszweig 8a und einer Mehrzahl von LIN-Buszweigen 8b zusammen. Selbstverständlich kann auch jeweils nur ein einziger Buszweig 8a bzw. 8b realisiert sein. Dabei wird der LIN-Buszweig 8b mit Hilfe des CAN-Buszweiges 8a angesteuert, und zwar über einen dortigen Transceiver 16. Folglich liefert das Steuergerät 9 über den CAN-Buszweig 8a die erforderlichen Informationen für den LIN-Buszweig 8b, die im Transceiver 16 getrennt und in den LIN-Buszweig 8b abgezweigt werden. In gleicher Weise lassen sich Signale vom LIN-Buszweig 8b über den Transceiver 16 und den CAN-Buszweig 8a vom Steuergerät 9 aufnehmen und verarbeiten.

An den LIN-Buszweig 8b sind Funktionseinheiten 2, 4, 6 angeschlossen, die lediglich einseitig Befehle vom Steuergerät 9 empfangen oder ausschließlich Signale senden. Hierbei handelt es sich im Rahmen des Ausführungsbeispiels zum einen um den Außenspiegel 6 und zum anderen den Einklemmschutz 4. Die Stromversorgung des Außenspiegels 6 erfolgt direkt am Spiegel, so dass der LIN-Buszweig 8b mit seinem einen Draht lediglich Stellsignale für den dortigen Aktuator M vom Steuergerät 9 überträgt. Umgekehrt sendet der Einklemmschutz 4 über eine Ein-Ausgabeeinheit 17 entsprechende Signale direkt an das Steuergerät 9. - Vergleichbares gilt schließlich für die Sensoreinheit 2, die ebenfalls über den LIN-Buszweig 8b mit dem Steuergerät 9 kommuniziert. Bei dem zugehörigen Sensor S mag es sich um einen Messwertaufnehmer handeln, welcher zur Diagnose des Steuergerätes 9 eingesetzt wird. Im Beispielfall können der aufgenommene Strom, die Temperatur eines die gesamte Einheit aufnehmenden Gehäuses, die Versorgungsspannung etc. mit Hilfe des entsprechend ausgelegten Sensors S (oder mehrere Sensoren S) überwacht werden, wobei entsprechende Sensorsignale über den LIN-Buszweig 8b an das Steuergerät 9 übergeben werden.

Dagegen verbindet der CAN-Buszweig 8a solche Funktionseinheiten 1, 3 und 5, die zweiseitig mit dem Steuergerät 9 kommunizieren. Hierbei handelt es sich um die Zentralverriegelungseinheit 1, den Fensterheber 3 und die einzelnen Kraftfahrzeugtürverschlüsse 5. Tatsächlich empfängt die Zentralverriegelungeinheit 1 nicht nur Steuersignale vom Steuergerät 9, um einen Zentralverriegelungsmotor M_{ZV} anzusteuern, sondern liefert gleichzeitig auch eine Rückmeldung über die Position der Mechanik im Kraftfahrzeugürverschluss. Hierzu dienen einzelne Hallsensoren S, die in Bezug auf den jeweiligen Kraftfahrzeugtürverschluss 5 lediglich angedeutet sind.

In vergleichbarer Weise wird vom Steuergerät 9 ein Diebstahlsicherungsmotor M_{DS} angesprochen und dessen Stellung (mit Hilfe des Sensors S im Kraftfahrzeugtürverschluss 5) überwacht. Vergleichbares gilt für den Fensterhebermotor 3, dessen Aktuator bzw. Elektromotor M vom Steuergerät 9 nicht nur angesprochen wird, sondern beispielsweise auch hinsichtlich des aufgenommenen Stroms eine Überwachung erfährt. Sobald bestimmte Schwellwerte überschritten werden, wird der zugehörige Aktuator M vom Steuergerät 9 abgeschaltet.

Zur Stromversorgung des Aktuators M des Fensterhebers 3 dient - wie gesagt - eine 42 Volt-Versorgung, welche über eine Schaltstufe bzw. ein Relais 18 die Versorgung sicherstellt. Gezeigt ist ferner ein Sensorinterface 19, welches die Signale der einzelnen Sensoren S der jeweiligen Kraftfahrzeugtürverschlüsse 5 zusammenfasst und an das Steuergerät 9 übergibt. Einzelne Controller 20 im Bus 8a, 8b bzw. im Steuergerät 9 sorgen dafür, dass die Kommunikation über das Bussystem 8a, 8b störungsfrei erfolgt. Schließlich ist eine Bedienvorrichtung 21 beispielhaft dem LIN-Buszweig 8b zugeordnet, bei welcher es sich im einfachsten Fall um einen Schalter handeln mag und die für die entsprechende Ansteuerung des Außenspiegels 6 sorgt.

## Patentansprüche

1. Steuereinrichtung für elektrisch betriebene Funktionseinheiten (1 bis 7) in Kraftfahrzeugen, wobei
- die Funktionseinheiten (1 bis 7) mittels eines Bussystems (8a, 8b) mit ausschließlich einem einzigen Steuergerät (9) kommunizieren, wobei ferner
- das einzige Steuergerät (9) sämtliche Steuer-, Überwachungs-und Auswertefunktionen übernimmt und die Funktionseinheiten (1 bis 7) lediglich über von dem Steuergerät (9) beaufschlagte Aktuatoren (M, M_{ZV}, M_{DS}) und/oder Sensoren (S) verfügen, und wobei
- zur Spannungsversorgung der Funktionseinheiten (1 bis 7) sowie des einzigen Steuergerätes (9) und des Bussystems (8a, 8b) ein Akkumulator (10) dient,
**dadurch gekennzeichnet,dass**
- das einzige Steuergerät (9) eine angeschlossene Überwachungseinheit (14) aufweist, welche das Steuergerät (9) turnusmäßig überprüft und ansonsten in einen sogenannten "Sleep-Modus" überführt, wobei
- zur Energieversorgung der Überwachungseinheit (14) eine separate Versorgungsquelle (15) dient.

2. Steuereinrichtung nach Anspruch 1, **dadurch gekennzeichnet, dass** sich das Bussystem (8a, 8b) aus wenigstens einem CAN-Buszweig (8a) und zumindest einem LIN-Buszweig (8b) zusammensetzt.

3. Steuereinrichtung nach Anspruch 1 oder 2, **dadurch gekennzeichnet, dass** der LIN-Buszweig (8b) mittels des CAN-Buszweiges (8a) angesteuert wird.

4. Steuereinrichtung nach einem der Ansprüche 1 bis 3, **dadurch gekennzeichnet, dass** an den LIN-Buszweig (8b) Funktionseinheiten (2, 4, 6) angeschlossen sind, die lediglich einseitig Befehle vom einzigen Steuergerät (9) empfangen oder ausschließlich Signale senden, z. B. Außenspiegel (6), Einklemmschutz (4), Sensoreinheit (2) etc., während mit dem CAN-Buszweig (8b) Funktionseinheiten (1, 3, 5) verbunden sind, die zweiseitig mit dem Steuergerät (9) kommunizieren, z. B. Zentralverriegelungseinheit (1), Fensterheber (3), Kraftfahrzeugtürverschluss (5).

5. Steuereinrichtung nach einem der Ansprüche 1 bis 4, **dadurch gekennzeichnet, dass** die über das Bussystem (8a, 8b) übertragenen Daten gemultiplext werden.

## Claims

1. Control device for electrically operated functional units (1 to 7) in powered vehicles, wherein
the functional units (1 to 7) communicate with a single control device (9) by means of a bus system (8a, 8b), wherein further
the single control device (9) takes over all of the control, monitoring and evaluation functions and the functional units (1 to 7) only have at their disposal actuators (M, M_{ZV}, M_{DS}) and/or sensors (S) which are actuated by means of the control device (9), and wherein
an accumulator serves as the voltage supply of the functional units (1 to 7) as well as of the single control unit (9) and of the bus system (8a, 8b),
**characterised in that**
the single control unit (9) has a monitoring unit (14) connected to it, which inspects the control unit (9) in a regular cycle and additionally transfers it into "Sleep Mode", wherein
a separate voltage source (15) serves as the energy supply of the monitoring unit (14).

2. Control device according to claim 1, **characterised in that** the bus system (8a, 8b) is comprised of at least one CAN-bus branch (8a) and not less than one LIN-bus branch (8b).

3. Control device according to claim 1 or 2, **characterised in that** the LIN-bus branch (8b) is controlled by means of the CAN-bus branch (8a).

4. Control device according to one of the claims 1 to 3, **characterised in that** the LIN-bus branch (8b) has functional units (2, 4, 6) connected to it, which receive commands only uni-directionally from the single control device (9) or exclusively transmit signals, e.g. wing mirrors (6), trap protection device(4), sensor unit (2) etc., while with the CAN-bus branch (8b) functional units (1, 3, 5) are connected, which communicate bidirectionally with the control device (9), e.g. central-locking unit (1), window opener (3), vehicle door lock (5).

5. Control device according to one of the claims 1 to 4, **characterised in that** the date transmitted over the bus system (8a, 8b) are multiplexed.

## Revendications

1. Dispositif de commande pour des unités fonctionnelles à fonctionnement électrique (1 à 7) dans des véhicules automobiles, dans lequel :
- les unités fonctionnelles (1 à 7) communiquent avec un unique appareil de commande (9) au moyen d'un système de bus (8a, 8b), sachant qu'en outre :
- l'unique appareil de commande (9) se charge de toutes les fonctions de commande, de surveillance et d'évaluation et que les unités fonctionnelles (1 à 7) disposent seulement d'actionneurs (M, M_{ZV}, M_{DS}) et/ou de capteurs (S) alimentés par l'appareil de commande (9), et sachant que :
- un accumulateur (10) sert à l'alimentation en tension des unités fonctionnelles (1 à 7) ainsi que de l'unique appareil de commande (9) et du système de bus (8a, 8b),
**caractérisé en ce que** :
- l'unique appareil de commande (9) présente une unité de surveillance connectée (14) qui contrôle l'appareil de commande (9) par intervalles et qui le transmet sinon dans un « mode de repos », sachant que :
- une source d'alimentation séparée (15) sert à l'alimentation en énergie de l'unité de surveillance (14).

2. Dispositif de commande selon la revendication 1, **caractérisé en ce que** le système de bus (8a, 8b) est constitué d'au moins une ramification de bus CAN (8a) et d'au moins une ramification de bus LIN (8b).

3. Dispositif de commande selon l'une ou l'autre des revendications 1 et 2, **caractérisé en ce que** la ramification de bus LIN (8b) est pilotée au moyen de la ramification de bus CAN (8a).

4. Dispositif de commande selon l'une des revendications 1 à 3, **caractérisé en ce que** des unités fonctionnelles (2, 4, 6) sont connectées à la ramification de bus LIN (8b), lesquelles reçoivent seulement sur un côté des instructions depuis l'unique appareil de commande (9) ou lesquelles envoient exclusivement des signaux, par exemple un rétroviseur extérieur (6), une protection anti-coincement (4), une unité de capteur (2), etc., tandis que des unités fonctionnelles (1, 3, 5) sont connectées à la ramification de bus CAN (8a), lesquelles communiquent des deux côtés avec l'appareil de commande (9), par exemple une unité de verrouillage centralisé (1), un lève-glace (3), une fermeture de portière de véhicule automobile (5).

5. Dispositif de commande selon l'une des revendications 1 à 4, **caractérisé en ce que** les données transmises par l'intermédiaire du système de bus (8a, 8b) sont multiplexées.
